# FASCICULE DE BREVET EUROPEEN

(11) **EP 1 357 004 B1**
(45) Date de publication et mention de la délivrance du brevet: **06.09.2006**
(21) Numéro de dépôt: 03290959.0
(22) Date de dépôt: 17.04.2003
(51) Int. Cl.: B60S 1/04

(54) **Dispositif d'aménagement d'une baie d'un véhicule automobile, utilisant un mécanisme d'essuie-glace à support frangible**
Einbauvorichtung für eine Öffnung eines Kraftfahrzeuges, mit einem zerbrechbaren Träger für eine Scheibenwischervorrichtung
Arrangement for an opening of a vehicle body, using a breakable support for the windscreen wiper system

(30) Priorité: 22.04.2002 FR 0204999
(43) Date de publication de la demande: 29.10.2003
(73) Titulaire: Peugeot Citroën Automobiles S.A., 78140 Vélizy Villacoublay (FR)
(72) Inventeur: Jeuffe, Gérard, 78810 Feucherolles (FR)
(74) Mandataire: Thinat, Michel

(56) Documents cités:
- PATENT ABSTRACTS OF JAPAN vol. 011, no. 316 (M-631), 15 octobre 1987 (1987-10-15) & JP 62 099244 A (MAZDA MOTOR CORP), 8 mai 1987 (1987-05-08)
- PATENT ABSTRACTS OF JAPAN vol. 2000, no. 14, 5 mars 2001 (2001-03-05) & JP 2000 326829 A (MITSUBISHI MOTORS CORP), 28 novembre 2000 (2000-11-28)
- PATENT ABSTRACTS OF JAPAN vol. 1999, no. 11, 30 septembre 1999 (1999-09-30) & JP 11 165613 A (TOYOTA MOTOR CORP), 22 juin 1999 (1999-06-22)
- PATENT ABSTRACTS OF JAPAN vol. 2000, no. 20, 10 juillet 2001 (2001-07-10) & JP 2001 071871 A (DAIHATSU MOTOR CO LTD), 21 mars 2001 (2001-03-21)

## Description

La présente invention concerne, de façon générale, les carrosseries de véhicules automobiles.

Plus précisément, l'invention concerne un dispositif d'aménagement d'une baie de véhicule automobile, comprenant au moins un cadre, un pare-brise monté sur le cadre, un mécanisme d'essuie-glace incluant un axe moteur dont une partie externe fait saillie de la baie, et un support offrant une liaison de résistance maximale limitée, par l'intermédiaire de laquelle le mécanisme est relié au cadre.

Un dispositif de ce type est par exemple décrit dans le document de brevet EP-A-1 040 972.

Comme le montre notamment ce document, les recherches permanentes en matière de sécurité ont récemment conduit à lier les mécanismes d'essuie-glace au cadre de la baie, c'est-à-dire en définitive à la carrosserie du véhicule, de manière à permettre à ces mécanismes de s'escamoter en cas d'impact, et de limiter ainsi la sévérité du choc que subirait un piéton ou un cycliste dont la tête heurterait la partie externe de l'axe moteur de tels mécanismes.

Cependant, les dispositifs de ce type ont pour inconvénient que la rupture de l'axe d'essuie-glace n'entraîne pas l'effacement de l'essuie-glace qui demeure en saillie et est donc très dangereux en cas de choc subi par un piéton. En outre, pour être appliqués avec succès, les dispositifs de ce type doivent présenter à la fois une efficacité élevée et reproductible, et une structure aussi simple que possible, permettant une fabrication à moindre coût.

JP-A-2000 326829 décrit un dispositif d'aménagement d'une baie de véhicule automobile comprenant les caractéristiques énoncées dans le préambule de la revendication 1.

Cependant, ce dispositif connu conduit à une structure relativement complexe de celui-ci.

La présente invention a précisément pour but de proposer un dispositif d'aménagement de baie de véhicule automobile répondant aux besoins précités, notamment à l'effacement de l'axe et de l'essuie-glace associé et d'une structure simple.

A cette fin, le dispositif de l'invention comprend les caractéristiques énoncées dans la partie caractérisante de la revendication 1.

Dans le mode de réalisation préféré de l'invention, la plaque présente une ligne d'affaiblissement se refermant sur elle-même, cette ligne d'affaiblissement étant par exemple formée par une dépression pratiquée dans la plaque du côté de l'auvent.

La plaque peut s'étendre, vers l'extérieur de l'auvent, dans le prolongement de la surface externe du pare-brise, et présenter, vers l'intérieur de l'auvent, un talon qui se superpose au bord inférieur du pare-brise.

Le pare-brise peut être maintenu par un premier cordon de colle sur un rebord supérieur d'une paroi interne de l'auvent, un second cordon de colle pouvant maintenir la plaque sur un rebord inférieur de cette paroi interne.

La plaque peut également être percée d'ouvertures pour former une grille d'entrée d'air pour l'auvent, et est avantageusement réalisée dans un matériau polymère cassant.

D'autres caractéristiques et avantages de l'invention ressortiront clairement de la description qui en est faite ci-après, à titre indicatif et nullement limitatif, en référence aux dessins annexés, dans lesquels:
- la Figure 1 est une vue en perspective externe d'une baie d'un véhicule automobile, équipée d'un dispositif conforme à l'invention ; et
- la Figure 2 est une vue en coupe du dispositif de la figure 1 suivant l'incidence définie par les lignes II-II de la figure 1, cette figure représentant en pointillés la position du mécanisme d'essuie-glace après un choc sur la partie externe de ce dernier.

Comme annoncé précédemment, l'invention concerne un dispositif d'aménagement d'une baie de véhicule automobile, et en particulier de la baie avant de ce véhicule.

Outre le cadre 1 dans lequel cette baie est formée, le dispositif de l'invention comprend un pare-brise 2 monté sur ce cadre 1, un mécanisme d'essuie-glace 3, et un support 4 pour ce mécanisme.

Le mécanisme d'essuie-glace 3 inclut un axe moteur 30, une partie externe 31 liée à l'axe moteur 30, faisant saillie de la baie, et entraînant un balai d'essuie-glace correspondant 32, et une bielle 33 liant l'axe 30 à un moteur électrique 34.

L'invention concerne de façon plus spécifique le support 4, qui est conçu pour offrir une liaison mécanique de résistance maximale limitée grâce à laquelle le mécanisme d'essuie-glace 3 est indirectement supporté par le cadre 1.

A cette fin, le support 4 comprend une plaque 40, qui est traversée par l'axe moteur 30, et qui est réalisée dans un matériau frangible propre à se rompre en cas de choc sur la partie externe 31 de l'axe moteur, par exemple dans un matériau polymère cassant.

Cette plaque 40 est surmoulée ou collée sur le bord inférieur 20 du pare-brise 2 et forme ainsi la paroi externe d'un espace libre 5, appelé "auvent" par l'homme de métier, et qui est disposé entre le capot moteur et l'habitacle, à la base du pare-brise.

Plus précisément, la plaque 40 s'étend, vers l'extérieur de l'auvent 5, dans le prolongement de la surface externe du pare-brise 2, et présente, vers l'intérieur de l'auvent 5, un talon 44 qui se superpose au bord inférieur 20 du pare-brise 2.

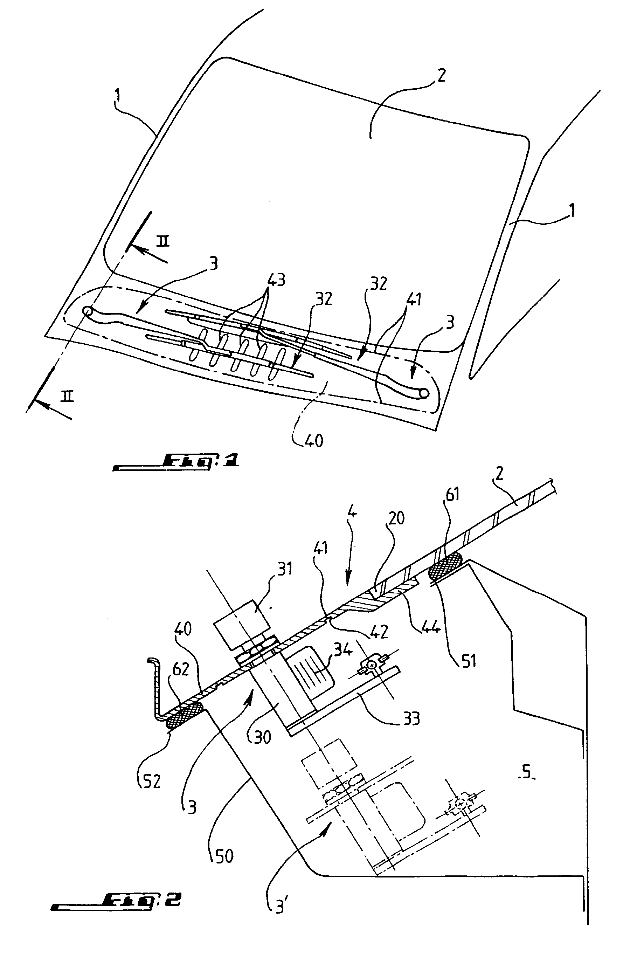

De préférence, la plaque 40 présente une ligne d'affaiblissement 41 se refermant sur elle-même pour former une boucle continue illustrée à la figure 1, cette ligne d'affaiblissement étant par exemple réalisée par une dépression 42 pratiquée dans la plaque 40 du côté de l'auvent 5 et réduisant donc localement l'épaisseur de cette plaque.

La paroi interne 50 de l'auvent 5 présente avantageusement un rebord supérieur 51 et un rebord inférieur 52.

Dans ces conditions, le pare-brise 2 peut être maintenu par un cordon de colle 61 déposé sur le rebord supérieur 51 de la paroi interne 50 de l'auvent 5, et la plaque 40 peut être maintenue par un cordon de colle 62 déposée sur le rebord inférieur 52 de cette paroi 50.

Enfin, comme le montre la figure 1, la plaque support 40 peut être percée d'ouvertures 43, cette plaque assurant ainsi la fonction de grille d'entrée d'air pour l'auvent 5 en plus de sa fonction de support du mécanisme 3.

Dans le cas où un choc d'intensité suffisante serait appliqué sur la partie externe 31 de l'axe moteur 30, par exemple dans l'hypothèse d'un accident au cours duquel un piéton serait projeté contre cette partie 31, la plaque 40 cèderait le long de sa ligne d'affaiblissement 41 et le mécanisme 3 s'effacerait dans l'auvent 5, adoptant la position indiqué en 3' par des pointillés, et cessant ainsi de constituer un objet contondant et dangereux pour la personne accidentée.

Le mécanisme d'essuie-glace est représenté à titre d'exemple non limitatif et le dispositif de l'invention peut être muni de mécanismes de conceptions différentes.

## Revendications

1. Dispositif d'aménagement d'une baie de véhicule automobile, comprenant au moins un cadre (1), un pare-brise (2) monté sur le cadre (1), au moins un mécanisme d'essuie-glace (3) incluant un axe moteur (30) dont une partie externe (31) fait saillie de la baie, et un support (4) offrant une liaison de résistance maximale limitée, par l'intermédiaire de laquelle le mécanisme (3) est relié au cadre (1), le support (4) comprenant une plaque (40) traversée par l'axe moteur (30), cette plaque formant la paroi externe d'un espace libre (5), ou auvent, dans lequel vient s'effacer l'ensemble du mécanisme d'essuie-glace (3) comprenant l'axe moteur (30) et l'essuie-glace associé, le moteur (34) d'entraînement de l'axe moteur (30) et l'embiellage (33) de liaison du moteur (34) à cet axe (30), au cas où un choc d'intensité suffisante serait appliqué sur la partie externe de l'axe moteur (30) ou sur l'essuie-glace associé, **caractérisé en ce que** la plaque (40) du support (4) est réalisée dans un matériau frangible propre à se rompre en cas de choc sur la partie externe de l'axe moteur (30) ou sur l'essuie-glace associé, la plaque (40) étant surmoulée ou collée sur un bord inférieur (20) du pare-brise (2), l'ensemble du mécanisme d'essuie-glace venant s'effacer dans l'espace libre (5), ou auvent, en cas de rupture de la plaque (40).

2. Dispositif suivant la revendication 1, **caractérisé en ce que** la plaque (40) présente une ligne d'affaiblissement (41) se refermant sur elle-même.

3. Dispositif suivant la revendication 2, **caractérisé en ce que** la ligne d'affaiblissement (41) est formée par une dépression (42) pratiquée dans la plaque (40) du côté de l'auvent (5).

4. Dispositif suivant l'une quelconque des revendications précédentes, **caractérisé en ce que** la plaque (40) s'étend, vers l'extérieur de l'auvent (5), dans le prolongement de la surface externe du pare-brise (2), et présente, vers l'intérieur de l'auvent (5), un talon (44) qui se superpose au bord inférieur (20) du pare-brise (2).

5. Dispositif suivant l'une quelconque des revendications précédentes, **caractérisé en ce que** le pare-brise (2) est maintenu par un cordon de colle (61) sur un rebord supérieur (51) d'une paroi interne (50) de l'auvent (5).

6. Dispositif suivant l'une quelconque des revendications précédentes, **caractérisé en ce que** la plaque (40) est maintenue par un cordon de colle (62) sur un rebord inférieur (52) d'une paroi interne (50) de l'auvent (5).

7. Dispositif suivant l'une quelconque des revendications précédentes, **caractérisé en ce que** la plaque (40) est percée d'ouvertures (43) pour former une grille d'entrée d'air pour l'auvent (5).

8. Dispositif suivant l'une quelconque des revendications précédentes, **caractérisé en ce que** la plaque (40) est réalisée dans un matériau polymère cassant.

## Claims

1. An arrangement for an opening of a vehicle body, comprising at least one frame (1), a windscreen (2) mounted on the frame (1), at least one windscreen wiper system (3) including a motive axis (30) and external portion of which (31) protrudes from the opening, and a support (4) providing a connection with limited maximum strength, through which the system (3) is connected to the frame (1), the support (4) comprising a plate (40) crossed by the motive axis (30) this plate forming the external wall of a free space (5), or canopy, into which the assembly of the windscreen wiper system (3) comprising the motive axis (30) and the associated windscreen wiper, the motor (34) for driving the motive axis (30) and the connecting rod assembly (33) for connecting the motor (34) to this axis (30), will retract in case an impact with sufficient intensity should be applied on the external portion of the motive axis (30) or on the associated windscreen wiper, **characterized in that** the plate (40) of the support (4) is made in a frangible material able to break in the case of an impact on the external portion of the motive axis (30) or on the associated windscreen wiper, the plate (40) being overmoulded or bonded onto a lower edge (20) of the windscreen (2), the windscreen wiper system assembly will retract into the free space (5) or canopy, in the case of failure of the plate (40).

2. The arrangement according to claim 1, **characterized in that** the plate (40) has a break-off line (41) closing on itself.

3. The arrangement according to claim 2, **characterized in that** the break-off line (41) is formed by a depression (42) provided in the plate (40) on the side of the canopy (5).

4. The arrangement according to any of the preceding claims, **characterized in that** the plate (40) extends, towards the outside of the canopy (5), in the extension of the external surface of the windscreen (2) and has, towards the inside of the canopy (5), a lug (44) which is superimposed on the lower edge (20) of the windscreen (2).

5. The arrangement according to any of the preceding claims, **characterized in that** the windscreen (2) is maintained by a fillet of adhesive (61) on an upper edge (51) of an internal wall (50) of the canopy (5).

6. The arrangement according to any of the preceding claims, **characterized in that** the plate (40) is maintained by a fillet of adhesive (62) on a lower edge (52) of an internal wall (50) of the canopy (5).

7. The arrangement according to any of the preceding claims, **characterized in that** the plate (40) is perforated with apertures (43) in order to form an air inlet grid for the canopy (5).

8. The arrangement according to any of the preceding claims, **characterized in that** the plate (40) is made in frangible polymer material.

## Patentansprüche

1. Einbauvorrichtung für eine Öffnung eines Kraftfahrzeugs, aufweisend mindestens einen Rahmen (1), eine auf dem Rahmen (1) montierte Windschutzscheibe (2), mindestens eine Scheibenwischervorrichtung (3), eine Motorachse (30) einschließend, von der ein äußerer Teil (31) aus der Öffnung hervorragt, und einen Träger (4), der eine begrenzt maximal haltbare Verbindung gewährleistet, durch welche die Vorrichtung (3) mit dem Rahmen (1) verbunden ist, wobei der Träger (4) eine Platte (40) aufweist, durch welche die Motorachse (30) hindurchgeht, wobei diese Platte die Außenwand eines Freiraums (5) bzw. eines Windfangs bildet, in den die gesamte Scheibenwischervorrichtung (3), die Motorachse (3) und den verbundenen Scheibenwischer, den Antriebsmotor (34) der Motorachse (30) und den Stangensatz (33) zur Verbindung des Motors (34) mit dieser Achse (30) aufweisend, in dem Fall zurückweicht, wenn ein ausreichend intensiver Stoß auf den äußeren Teil der Motorachse (30) oder auf den verbundenen Scheibenwischer einwirkt, **dadurch gekennzeichnet, dass** die Platte (40) des Trägers (4) aus einem zerbrechbaren Material gefertigt ist, das bei einem Stoß auf den äußeren Teil der Motorachse (30) oder auf den verbundenen Scheibenwischer zerbrechen kann, wobei die Platte (40) auf einen unteren Rand (20) der Windschutzscheibe (2) aufgeformt oder geklebt ist, wobei die gesamte Scheibenwischervorrichtung in den Freiraum (5) bzw. den Windfang zurückweicht, wenn die Platte (40) zerbricht.

2. Vorrichtung nach Anspruch 1, **dadurch gekennzeichnet, dass** die Platte (40) eine in sich geschlossene Schwächungslinie (41) aufweist.

3. Vorrichtung nach Anspruch 2, **dadurch gekennzeichnet, dass** die Schwächungslinie (41) von einer Vertiefung (42) gebildet wird, die in die Platte von der Seite des Windfangs (5) eingearbeitet ist.

4. Vorrichtung nach einem der vorhergehenden Ansprüche, **dadurch gekennzeichnet, dass** sich die Platte (40) außerhalb des Windfangs (5) in Verlängerung der Außenfläche der Windschutzscheibe (2) erstreckt und innerhalb des Windfangs (5) einen Vorsprung (44) aufweist, der den unteren Rand (20) der Windschutzscheibe (2) überlagert.

5. Vorrichtung nach einem der vorhergehenden Ansprüche, **dadurch gekennzeichnet, dass** die Windschutzscheibe (2) von einem Klebeband (61) auf einer oberen Kante (51) einer Innenwand (50) des Windfangs (5) gehalten wird.

6. Vorrichtung nach einem der vorhergehenden Ansprüche, **dadurch gekennzeichnet, dass** die Platte (40) von einem Klebeband (62) auf einer unteren Kante (52) einer Innenwand (50) des Windfangs (5) gehalten wird.

7. Vorrichtung nach einem der vorhergehenden Ansprüche, **dadurch gekennzeichnet, dass** die Platte (40) von Öffnungen (43) durchbrochen wird, um eine Lufteinlassgitter für den Windfang (5) zu bilden.

8. Vorrichtung nach einem der vorhergehenden Ansprüche, **dadurch gekennzeichnet, dass** die Platte (40) aus einem zerbrechbaren Polymermaterial gefertigt ist.
